# EUROPÄISCHE PATENTSCHRIFT

(11) **EP 0 638 754 B1**
(45) Veröffentlichungstag und Bekanntmachung des Hinweises auf die Patenterteilung: **30.10.1996**
(21) Anmeldenummer: 94111999.2
(22) Anmeldetag: 01.08.1994
(51) Int. Cl.: F16L 37/092, F16L 37/084

(54) **Schubgesicherte Steckmuffenverbindung**
Socket joint with means for locking against axial forces
Joint verrouillé à emboîtement

(30) Priorität: 02.08.1993 DE 9311500 U
(43) Veröffentlichungstag der Anmeldung: 15.02.1995
(73) Patentinhaber: EISENWERKE FRIED. WILH. DÜKER GmbH & Co., D-97753 Karlstadt (DE)
(72) Erfinder: Bergmann, Karl-Heinz, D-63768 Hösbach 2 (DE); Vorbeck, Manfred, D-63846 Laufach (DE); Percebois, Alain, F-54700 Blénod les Pont-a-Mousson (FR)
(74) Vertreter: Patentanwälte Leinweber & Zimmermann

(56) Entgegenhaltungen:
- EP-A- 0 247 214
- EP-A- 0 537 711
- DE-A- 3 232 221
- GB-A- 2 041 476
- US-A- 4 229 025

## Beschreibung

Die Erfindung bezieht sich auf eine schubgesicherte Steckmuffenverbindung, insbesondere für Formstücke sowie für im Schleudergußverfahren hergestellte Muffenrohre, bei der das Spitzende des einen Rohres mit radialem Spiel in das Muffenende des anderen Rohres einschiebbar ist, in dem ein Dichtring und ein von diesem getrennt ausgebildeter Klemmring angeordnet sind, der aus einer Vielzahl von in Umfangsrichtung mit gegenseitigem Abstand angeordneten Klemmsegmenten besteht, die eine ballig ausgebildete äußere Mantelfläche aufweisen, in Umfangsrichtung jeweils durch eine anvulkanisierte Zwischenschicht aus Gummi o. dgl. miteinander verbunden sind und auf ihrer Innenfläche jeweils eine Zahnung aufweisen, die bei Auftreten von axialen Kräften durch Zusammenwirken der balligen Mantelfläche mit einer sich konisch zum Ende verjüngenden Innenfläche der Rohrmuffe radial gegen das Spitzende drücken, wobei an den Klemmring ein im Bereich des Muffenstirnendes festlegbares, ihn tragendes Halteteil mit einem aus Elastomer bestehenden ringscheibenförmigen Abschnitt angeformt ist, der aufgrund seiner verstärkten Ausbildung eine höhere Biegesteifigkeit besitzt und einen sich zum Klemmring ersteckenden, sich etwa konisch verjüngenden Verbindungsabschnitt umfaßt, der in Abhängigkeit von den Außenabmessungen des einzuführenden Spitzendes zusammen mit dem Klemmring aufweitbar und dabei in axialer Richtung dehnbar ist und wobei im Bereich des Muffenstirnendes ein dem Querschnitt des verstärkt ausgebildeten ringscheibenförmigen Abschnitts angepaßter Ausnehmungsbereich vorgesehen ist.

Bei einer bekannten Steckmuffenverbindung dieser Art (DE-OS 41 34 089) hat sich gezeigt, daß durch den ringförmigen Spalt zwischen den sich vom Muffenstirnende zum Klemmring erstreckenden Verbindungsabschnitt und dem in das Muffenende eingeführten Spitzende des angrenzenden Rohres Feuchtigkeit und Sauerstoff eindringen und zu den Klemmsegmenten des Klemmrings gelangen kann. Insbesondere im Fall stark saurer oder stark alkalischer Böden, in denen die Rohre verlegt sind, kann es zu nachteiligen chemischen Reaktionen an den Klemmsegmenten, d.h. zu Korrosion insbesondere im Bereich der Zahnung und damit zu Festigkeitsbeeinträchtigungen kommen.

Es hat sich nun gezeigt, daß dieser Gefahr auf einfache Weise dadurch begegnet werden kann, daß der Verbindungsabschnitt in seinem sich vom Klemmring mit den Klemmsegmenten zum Halteteil erstreckenden Bereich mindestens eine ringförmige, sich radial nach innen vorerstreckende, das Spitzende des eingeführten Rohrs elastisch umschließende Dichtungskante aufweist. Nach dem Einführen des Spitzendes des einen Rohres in das Muffenende des angrenzenden Rohres sorgt die das Spitzende elastisch umschließende Dichtungskante für einen Abschluß des Ringspalts und verhindert so den Zutritt von ggf. aggressiver Feuchtigkeit und Sauerstoff zu den Klemmsegmenten.

Die Wirksamkeit der Dichtungskante läßt sich in weiterer Ausgestaltung der Erfindung insbesondere im Hinblick auf mögliche große Abmessungstoleranzen zwischen den zu verbindenden Rohren dadurch wesentlich erhöhen, daß der Dichtungskante auf der Außenseite des Verbindungsabschnitts ein sich nach außen vorerstreckender, die elastische Nachgiebigkeit der Dichtungskante erhöhender Ringwulst zugeordnet ist, für dessen Aufnahme und Lagesicherung in gekuppeltem Zustand der Muffenverbindung im Bereich des Muffenendes eine Umfangsausnehmung ausgeformt ist.

Wenn die Umfangsausnehmung einen etwa halbkreisförmigen Querschnitt besitzt, wird die elastisch nachgiebige Beaufschlagung der Dichtungskante weiter begünstigt. Dieser Effekt läßt sich dadurch zusätzlich erhöhen, daß der Ringwulst zwei oder mehrere radial nach außen gerichtete, parallel zueinander verlaufende Rippen umfaßt, von denen die axial äußeren, an der Umfangsausnehmung zur elastischen Anlage gelangen. Die seitliche Beaufschlagung der axial äußeren Rippen des in die halbkreisförmige Umfangsausnehmung eingreifenden Ringwulstes begünstigt nämlich die elastische Nachgiebigkeit der Dichtungskante in radialer Richtung, da sich auch der mittlere Abschnitt des Ringwulstes in der Umfangsausnehmung radial verformen kann.

Als in funktioneller Hinsicht sehr zweckmäßig hat es sich herausgestellt, wenn die Breite der Dichtungskante im Bereich ihrer Basis kleiner ist als die Breite des der Dichtungskante außenseitig zugeordneten Ringwulstes im Bereich seiner Basis und damit der Breite der Umfangsausnehmung.

Bei einer abgewandelten Ausführung der erfindungsgemäßen Steckmuffenverbindung hat es sich als sehr vorteilhaft erwiesen, wenn der Ringwulst mit einem radialen Einführspalt zum Einsetzen eines die Biegesteifigkeit erhöhenden Stahlrings versehen ist und daß die Dichtungskante auf der dem Muffenstirnende zuwandten Spaltbegrenzungsseite des Ringwulstes angeformt ist. Diese Ausführung ist insbesondere bei schubgesicherten Steckmuffenverbindungen für größere Rohrdurchmesser einer Nennweite von NW 600 bzw. NW 1000 vorteilhaft, bei denen ein eingesetzter Stahlring vor und während der Montage die Lagesicherung des Klemmrings gewährleistet und sicherstellt, daß sich der Klemmring nicht selbständig lösen und zusammenfallen kann. Die Dichtungskante sorgt in diesem Fall ferner dafür, daß aggressive Feuchtigkeit weder zu den Klemmsegmenten noch zum Stahlring gelangen kann. Diese Abdichtungsfunktion wird dadurch weiter begünstigt, daß sowohl die Umfangsausnehmung als auch der Ringwulst etwa rechteckigen Querschnitt besitzen und daß die vom Ringwulst radial vorstehende Dichtungskante lippenförmig ausgebildet ist.

Weitere Einzelheiten, Vorteile und Merkmale ergeben sich aus der folgenden Beschreibung anhand der beigefügten Zeichnung, auf die bezüglich der Offenbarung aller nicht im Text beschriebenen Einzelheiten ausdrücklich verwiesen wird. Es zeigen
- Fig. 1: einen Schnitt durch das Spitzende eines Rohres mit übergeschobenem Muffenende des angrenzenden Rohres,
- Fig. 2: einen Ausschnitt aus Fig. 1, in größerem Maßstab, zur Veranschaulichung der erfindungsgemäßen Ausbildung gemäß einer ersten Ausführung,
- Fig. 3: eine Schnittansicht entsprechend Fig. 2 zur Veranschaulichung einer zweiten Ausführung und
- Fig. 4: eine Schnittansicht zur Veranschaulichung einer dritten Ausführung.

Wie aus der Zeichnung ersichtlich, weist das Muffenrohr 1 an seinem einen Ende, dem Muffenende 2 eine Muffe auf, in die mit radialem Spiel das Spitzende 3 eines angrenzenden Muffenrohres 1 eingeschoben werden kann. Im Inneren der Muffe ist eine Ausnehmung 4 vorgesehen, die in bestimmten Grenzen eine Relativverschwenkung der Rohre 1 zuläßt. Im Anschluß an diese Ausnehmung ist eine Abdichtungskammer 5 gebildet, die an ihrem einen Ende durch eine radial verlaufende Innenschulter 6 des Muffenendes 2 begrenzt ist. Im Abstand von der Innenschulter 6 verläuft im Bereich der Abdichtungskammer 5 ein Ringwulst 7. Dieser dient der Lagesicherung eines Dichtrings 8, der einen Kopfabschnitt 9 aus weicherem elastomerem Material und einen Fußabschnitt 10 aus härterem elastomerem Material aufweist. Dieser Fußabschnitt 10 befindet sich in einer Ringnut 11, die einerseits von dem Ringswulst 7 und andererseits von einer Stützschulter 12 begrenzt ist, die gleichzeitig das andere Ende der Abdichtungskammer 5 begrenzt. Der Dichtring 8 ist auf diese Weise in seiner Position festgelegt und behält die veranschaulichte Position auch dann bei, wenn das Spitzende 3 unter Verformung des Kopfabschnitts 9 in das Muffenende 2 eingeführt wird. Zwischen der Stützschulter 12 und dem stirnseitigen Ende des Muffenendes 2 befindet sich eine Verriegelungskammer 13, die der Aufnahme eines Klemmrings 14 dient. Dieser Klemmring 14 besteht aus einer Vielzahl von in Umfangsrichtung mit gegenseitigem Abstand angeordneten Klemmsegmenten 15. Die Klemmsegmente 15 sind in Umfangsrichtung jeweils durch eine in der Zeichnung nicht dargestellte anvulkanisierte Zwischenschicht aus Gummi o. dgl. miteinander verbunden. Auf ihrer der Verriegelungskammer 13 zugewandten Seite weisen die Klemmsegmente 15 jeweils eine ballig ausgebildete äußere Mantelfläche 17 auf. Diese wirkt mit einer sich konisch zum Ende verjüngenden Innenfläche 18 der Rohrmuffe zusammen, und zwar wird durch sie eine auf der Innenfläche der Klemmsegmente 15 jeweils vorgesehene Zahnung 19 bei Auftreten von axialen Kräften radial gegen das Spitzende 3 gedrückt.

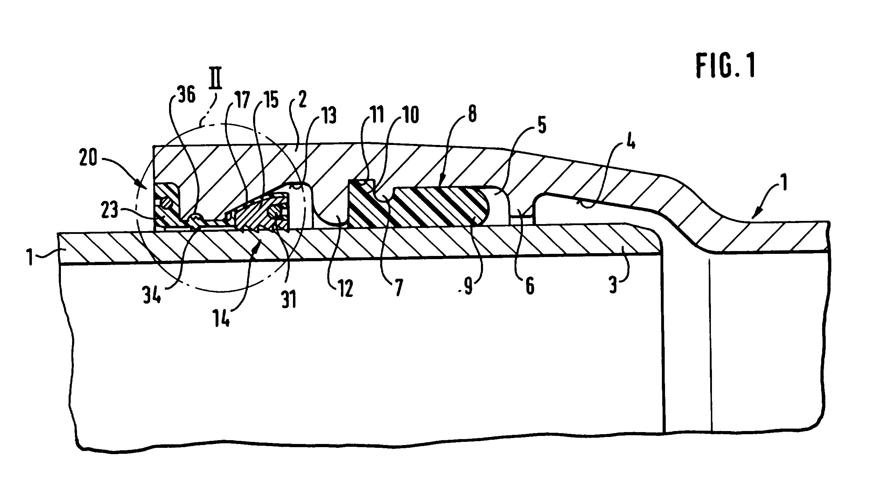

Wie aus der Fig. 1 hervorgeht, ist an den Klemmring 14 ein am Muffenstirnende festlegbares, ihn tragendes Halteteil 20 aus Elastomer angeformt. Dieses Halteteil 20 umfaßt einen an der Muffenstirnfläche 22 zur Anlage gelangenden ringscheibenförmigen Abschnitt 23. Im gezeigten Beispiel ist ein sich vom Innenrand der Muffenstirnfläche zum Klemmring 14 erstreckender, sich in entspanntem Zustand etwa konisch verjüngender Verbindungsabschnitt 24 vorgesehen. Dieser geht vom ringscheibenförmigen Abschnitt 23 aus, der besonders stark ausgebildet ist und eine höhere Biegesteifigkeit besitzt. Der Verbindungsabschnitt 24 ist in Abhängigkeit von den Außenabmessungen des einzuführenden Spitzendes 3 zusammen mit dem Klemmring 14 aufweitbar und dabei in axialer Richtung dehnbar, so daß er schließlich die in der Zeichnung gezeigte aufgeweitete Form erhält.

Aus der Zeichnung geht ferner hervor, daß der Verbindungsabschnitt 24 des Halteteils 20 an der balligen Mantelfläche 17 des Klemmrings 14, die der sich konisch verjüngenden Innenfläche 18 des Muffenendes zugewandt ist, mit einer isolierenden Auflage 25 versehen ist, die dazu dient, die miteinander verbundenen Rohre elektrisch voneinander zu isolieren. Diese Auflage 25 kann durch eine Emailschicht oder durch eine glasfaserverstärkte Kunststoffschicht gebildet sein.

Wie aus der Zeichnung entnehmbar, weist die Muffenstirnfläche 22 innenrandseitig einen dem Querschnitt des verstärkt ausgebildeten ringscheibenförmigen Abschnitts 23 angepaßten Ausnehmungsbereich 27 auf. Mit diesen Maßnahmen wird dazu beigetragen, daß das Halteteil 20 des Klemmrings mit seinen Klemmsegmenten 15 an der Innenfläche 13 der Muffe vor allem bei Steckmuffenverbindungen für große Nennweiten sowohl vor als auch während des Einschiebens des Rohrspitzendes in die Muffe anliegt. Dies wird durch die erhöhte Biegesteifigkeit aufgrund der verstärkten Ausbildung des Abschnitts 23 mit einem etwa rechteckigen Querschnitt gefördert. Dabei ist der Ausnehmungsbereich der Muffenstirnfläche durch eine innenrandseitige Abstufung 27 gebildet.

Bei Halteteil-Klemmring-Einheiten für Muffenrohre sehr großer Nennweiten ist dem verstärkt ausgebildeten ringscheibenförmigen Abschnitt 23 des Halteteils ein die Biegesteifigkeit erhöhender Stahlring 28 zugeordnet. Für diesen Stahlring 28 ist im Abschnitt 23 ein axialer Einführspalt 29 vorgesehen, durch den der Stahlring bei Bedarf eingesetzt und ggf. wieder entnommen werden kann. Die Halterung wird dabei durch Wahl einer Breite des Einführspalts 29, die kleiner als der Durchmesser des Stahlrings 28 bemessen ist, begünstigt.

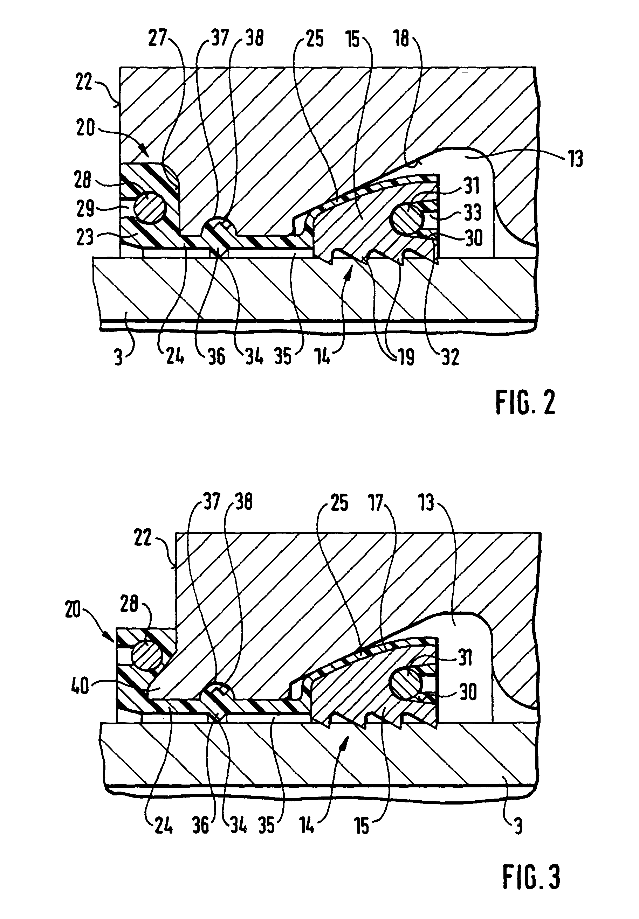

Wie insbesondere die Fig. 2 bis 4 zeigen, ist der Klemmring 14 mit den Klemmsegmenten 15 und der letztere in Umfangsrichtung verbindenden anvulkanisierten Zwischenschicht auf der Muffenstirnfläche 22 abgewandten rückwärtigen Seite mit einer Umfangsausnehmung 30 versehen, die der Aufnahme eines biegesteifen, vorzugsweise aus Stahl bestehenden Stützrings 31 dient. Zu diesem Zweck ist bei der gezeigten Ausführung in der Umfangsausnehmung 30 ein den Stützring 31 fixierender Haltering 32 aus elastomerem Material festgelegt. Die Umfangsausnehmung 30 des Klemmrings 14 ist in axialer Richtung offen und enthält einen in ihr fixierten Haltering 32 mit einem axialen Einführspalt 33 für den Stützring 31. Die Breite dieses Einführspalts 33 ist kleiner bemessen, als der Durchmesser des Stützrings 31.

Wie ersichtlich, weist der Verbindungsabschnitt 24 in seinem sich vom Klemmring 14 mit den Klemmsegmenten 15 zum Halteteil 20 erstreckenden Bereich eine ringförmige, sich radial nach innen vorerstreckende Dichtungskante 34 auf. Diese Dichtungskante 34 umschließt das Spitzende 3 des eingeführten Rohres 1 elastisch und verhindert so, daß Feuchtigkeit und Sauerstoff durch den ringförmigen Spalt 35 zwischen dem Verbindungsabschnitt 24 und dem Spitzende 3 eintreten und zu den Klemmsegmenten 15 des Klemmrings 14 gelangen kann. Auf der Außenseite des Verbindungsabschnitts 24 ist der Dichtungskante 34 ein sich nach außen vorerstreckender, die elastische Nachgiebigkeit der Dichtungskante 34 erhöhender Ringwulst 36 zugeordnet. Zur Aufnahme des Ringwulstes 36 ist im Bereich des Muffenendes 2 eine Umfangsausnehmung 37 ausgebildet.

Bei der Ausführung nach den Fig. 2 bzw. 3 besitzt diese Umfangsausnehmung 37 einen etwa halbkreisförmigen Querschnitt. Der Ringwulst 36 umfaßt bei der gezeigten Ausführung drei parallel zueinander verlaufende Rippen 38, die oberhalb des Ringwulstes mit der Umfangsausnehmung 37 einen Hohlraum begrenzen. Die axial äußeren Rippen 38 gelangen an der schräg verlaufenden Wandung der Umfangsausnehmung 37 zur elastischen Dichtungsanlage, verhindern den Feuchtigkeitsdurchtritt zur Kammer und bilden so einen Korrosionsschutz für die Klemmsegmente 15. Der mittlere Abschnitt mit der mittleren der Rippen 38 läßt sich elastisch in den Hohlraum hinein verformen, was die elastische Anlage der Dichtungskante 34 am Spitzende 3 des Rohres 1 begünstigt. Die Fig. 2 bzw. 3 lassen erkennen, daß die Breite der Dichtungskante 34 im Bereich ihrer Basis kleiner ist als die Breite des der Dichtungskante 34 außenseitig zugeordneten Ringwulstes 36 im Bereich seiner Basis und damit der Breite der Umfangsausnehmung 37.

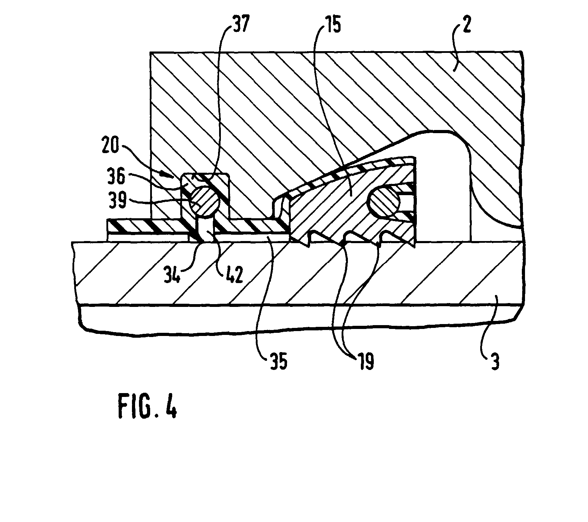

Bei der in Fig. 4 gezeigten abgewandelten Ausführung ist der Ringwulst 36 mit einem radialen Einführspalt 38 zum Einsetzen eines die Biegesteifigkeit erhöhenden Stahlrings 39 versehen. Bei dieser Ausführung ist die Dichtungskante 34 auf der dem Muffenstirnende 22 zugewandten Spaltbegrenzungsseite des Ringwulstes 36 vorgesehen, um sicherzustellen, daß von außen eintretende Feuchtigkeit bzw. Sauerstoff weder den Stahlring 39 noch die Zahnung 19 der Klemmsegmente 15 erreichen kann. Wie dargestellt, besitzen bei dieser Ausführung sowohl die Umfangsausnehmung 37 als auch der Ringwulst 36 einen etwa rechteckigen Querschnitt. Die vom Ringwulst 36 radial abstehende Dichtungskante 34 ist bei der Ausführung lippenförmig ausgebildet, um die elastische Verformbarkeit zu gewährleisten. Bei dieser Ausführung ist sichergestellt, daß der die Dichtungskante 34 tragende Ringwulst 36 mit seinem eingelegten Stahlring 39 gleichzeitig die Funktion des bei der Ausführung nach den Fig. 2 und 3 vorgesehenen, an der Muffenstirnseite 22 anliegenden Halteteils 20 übernimmt. Während das Halteteil 20 der Ausführung nach Fig. 2 dem Stand der Technik entspricht, ist das Halteteil 20 der Ausführung nach Fig. 3 so geformt, daß es einen radial inneren, stirnseitig vorspringenden kegelförmigen Muffenrand 40 hintergreift, was vor der Montage der Rohre zu einer erhöhten Lagesicherung des Klemmrings 14 insbesondere bei größeren Nennweiten der zu verbindenden Rohre führt und trotz Schaffung der Umfangsausnehmung 37 eine kürzere Muffenausbildung erlaubt, da sich der Abstand der Innenfläche 13 der Muffe von der Muffenstirnfläche 22 verringern läßt.

## Patentansprüche

1. Schubgesicherte Steckmuffenverbindung, insbesondere für Formstücke sowie für im Schleudergußverfahren hergestellte Muffenrohre (1), bei der das Spitzende (3) des einen Rohres mit radialem Spiel in das Muffenende (2) des anderen Rohres einschiebbar ist, in dem ein Dichtring (8) und ein von diesem getrennt ausgebildeter Klemmring (14) angeordnet sind, der aus einer Vielzahl von in Umfangsrichtung mit gegenseitigem Abstand angeordneten Klemmsegmenten (15) besteht, die eine ballig ausgebildete äußere Mantelfläche (17) aufweisen, in Umfangsrichtung jeweils durch eine anvulkanisierte Zwischenschicht aus Gummi o. dgl. miteinander verbunden sind und auf ihrer Innenfläche (18) jeweils eine Zahnung (19) aufweisen, die bei Auftreten von axialen Kräften durch Zusammenwirken der balligen Mantelfläche (17) mit einer sich konisch zum Ende verjüngenden Innenfläche (18) der Rohrmuffe radial gegen das Spitzende (3) drücken, wobei an den Klemmring (14) ein im Bereich des Muffenstirnendes festlegbares, ihn tragendes Halteteil (20) mit einem aus Elastomer bestehenden ringscheibenförmigen Abschnitt angeformt ist, der aufgrund seiner verstärkten Ausbildung eine höhere Biegesteifigkeit besitzt und einen sich zum Klemmring (14) erstreckenden, sich etwa konisch verjüngenden Verbindungsabschnitt (24) umfaßt, der in Abhängigkeit von den Außenabmessungen des einzuführenden Spitzendes (3) zusammen mit dem Klemmring (14) aufweitbar und dabei in axialer Richtung dehnbar ist und wobei im Bereich des Muffenstirnendes ein dem Querschnitt des verstärkt ausgebildeten ringscheibenförmigen Abschnitts (23) angepaßter Ausnehmungsbereich vorgesehen ist, dadurch gekennzeichnet, daß der Verbindungsabschnitt (24) in seinem sich vom Klemmring (14) mit den Klemmsegmenten (15) zum Halteteil (20) erstreckenden Bereich mindestens eine ringförmige, sich radial nach innen vorerstreckende, das Spitzende des eingeführten Rohrs elastisch umschließende Dichtungskante (34) aufweist.

2. Steckmuffenverbindung nach Anspruch 1, dadurch gekennzeichnet, daß der Dichtungskante (34) auf der Außenseite des Verbindungsabschnitts (24) ein sich nach außen vorerstreckender, die elastische Nachgiebigkeit der Dichtungskante (34) erhöhender Ringwulst (36) zugeordnet ist, für dessen Aufnahme und Lagesicherung in gekuppeltem Zustand der Muffenverbindung im Bereich des Muffenendes eine Umfangsausnehmung (37) ausgeformt ist.

3. Steckmuffenverbindung nach Anspruch 1 und 2, dadurch gekennzeichnet, daß die Umfangsausnehmung (37) einen etwa halbkreisförmigen Querschnitt besitzt.

4. Steckmuffenverbindung nach Anspruch 2 und 3, dadurch gekennzeichnet, daß der Ringwulst (36) zwei oder mehrere radial nach außen gerichtete, parallel zueinander verlaufende Rippen (38) umfaßt, von denen die axial äußeren an der Umfangsausnehmung (37) zur elastischen Anlage gelangen.

5. Steckmuffenverbindung nach einem der Ansprüche 2 bis 4, dadurch gekennzeichnet, daß die Breite der Dichtungskante (34) im Bereich ihrer Basis kleiner ist als die Breite des der Dichtungskante außenseitig zugeordneten Ringwulstes (36) im Bereich seiner Basis und damit der Breite der Umfangsausnehmung (37).

6. Steckmuffenverbindung nach den Ansprüchen 1 und 2, dadurch gekennzeichnet, daß der Ringwulst (36) mit einem radialen Einführspalt (38) zum Einsetzen eines die Biegesteifigkeit erhöhenden Stahlrings (39) versehen ist und daß die Dichtungskante (34) auf der dem Muffenstirnende zugewandten Spaltbegrenzungsseite des Ringwulstes (36) angeformt ist.

7. Steckmuffenverbindung nach Anspruch 6, dadurch gekennzeichnet, daß sowohl die Umfangsausnehmung (37) als auch der Ringwulst (36) etwa rechteckigen Querschnitt besitzen und daß die vom Ringwulst (36) radial vorstehende Dichtungskante (34) lippenförmig ausgebildet ist.

8. Steckmuffenverbindung nach einem der Ansprüche 1 bis 5, dadurch gekennzeichnet, daß das Muffenende (2) einen radial inneren, kegelförmigen Muffenrand (40) umfaßt, der stirnseitig über die in einer quer zur Rohrachse verlaufenden Ebene liegende Muffenstirnfläche (22) vorspringt und den das Halteteil (22) übergreift.

## Claims

1. Locking socket joint, particularly for formed pipe fittings and for centrifugally cast socket pipes (1), in which the tapered end (3) of one pipe can be inserted with radial play into the socket end (2) of the other pipe within which there are disposed a sealing ring (8) and, separate from the latter, a locking ring (14) which consists of a multiplicity of circumferentially disposed and mutually spaced locking segments (15) which, each having a cambered outer circumferential surface (17), being joined together circumferentially by a moulded-on intermediate layer of rubber or similar material and having toothing (19) on its inner surface (18), upon the occurrence of radial forces exert radial pressure towards the tapered end (3) through the combined action of the cambered circumferential surface (17) and an inner surface (18) of the pipe socket which tapers conically towards the end, there being formed on to the locking ring (14) a retaining part (20), capable of being located in the area of the end face of the socket and supporting the locking ring, having an annular elastomer section which possesses a greater flexural strength due to its stronger construction and comprising an approximately conically tapered connecting section (24), extending to the locking ring (14), which is capable of expansion together with the locking ring (14), dependent on the outer dimensions of the tapered end (3) to be inserted, while also being axially extensible and a recessed area, matching the cross-section of the stronger annular section (23), being provided in the area of the end face of the socket, characterized in that the area of the connecting section (24) extending between the locking ring (14) with the locking segments (15) and the retaining part (20) possesses one or more annular sealing edges (34) which extend radially inwards, elastically enclosing the tapered end of the inserted pipe.

2. Socket joint according to Claim 1, characterized in that there is assigned to the sealing edge (34) on the outer face of the connecting section (24) an annular bead (36), extending outwards and increasing the elasticity of the sealing edge (34), which is accommodated and secured in position in the coupled socket joint by a circumferential recess (37) formed in the area of the socket end.

3. Socket joint according to either of Claims 1 or 2, characterized in that the circumferential recess (37) has an approximately semicircular cross-section.

4. Socket joint according to either of Claims 2 or 3, characterized in that the annular bead (36) comprises two or several parallel ribs (38), oriented radially outwards, of which the axially outermost ribs bear elastically on the circumferential recess (37).

5. Socket joint according to any one of Claims 2 to 4, characterized in that the width of the sealing edge (34), in the area of its base, is less than the width of the annular bead (36), in the area of its base, assigned to the outside of the sealing edge and, consequently, less than the width of the circumferential recess (37).

6. Socket joint according to either of Claims 1 or 2, characterized in that the annular bead (36) possesses a radial insertion aperture (42) for the insertion of a steel ring (39) which increases the flexural strength and in that the sealing edge (34) is formed on the side of the annular bead (36) which delimits the aperture on the side closest to the end face of the socket.

7. Socket joint according to Claim 6, characterized in that both the circumferential recess (37) and the annular bead (36) have an approximately rectangular cross-section and in that the sealing edge (34) projecting radially from the annular bead (36) forms a lip.

8. Socket joint according to any one of Claims 1 to 5, characterized in that the socket end (2) comprises a conical socket edge (40), extending radially inwards, the end of which projects beyond the end face (22) of the socket which lies in a plane perpendicular to the axis of the pipe and overlaps the retaining part (20).

## Revendications

1. Liaison par manchons à emboîtement, assurée en coulissement, en particulier pour des pièces de forme ainsi que pour des tubes de manchon (11) fabriqués selon un procédé de moulage par centrifugation, liaison dans laquelle l'extrémité de pointe (3) d'un premier tube peut être emboîtée, avec un jeu radial, dans l'extrémité de manchon (2) de l'autre tube, dans lequel sont disposés un anneau d'étanchéité (8) et une bague de serrage (13) réalisée séparément de celui-ci, la bague de serrage (17) étant constituée d'une pluralité de segments de serrage (15) disposés avec un espacement mutuel en direction périphérique et présentant une surface d'enveloppe extérieure (17) bombée, l'anneau (8) et la bague (14) étant reliés ensemble en direction périphérique au moyen d'une couche intermédiaire de caoutchouc, ou analogue, appliquée par vulcanisation et présentant sur leur face intérieure (18) chacun une denture (19) qui, lors de la survenance d'efforts axiaux, presse, par coopération de la surface d'enveloppe bombée (17) avec une surface intérieure (18) allant en s'effilant coniquement en direction de l'extrémité, le manchon tubulaire radialement contre l'extrémité de pointe (3), sur la bague de serrage (14) étant formée une partie de maintien (20), pouvant être fixée dans la zone de l'extrémité frontale de manchon et la portant, avec un tronçon en forme de disque annulaire, constitué en élastomère et qui, du fait de sa réalisation renforcée, a une rigidité en flexion plus élevée et comprend un tronçon de liaison (24), s'étendant en direction de la bague de serrage (14) et allant en s'effilant à peu près de façon conique, tronçon (24) qui, en fonction des dimensions extérieures de l'extrémité de pointe (3) à introduire, peut être élargi, conjointement avec la bague de serrage (14), et être étendu alors en direction axiale, et dans la zone de l'extrémité frontale de manchon étant prévue une zone d'évidement, adaptée à la section transversale du tronçon (23) en forme de disque annulaire renforcé, caractérisée en ce que la le tronçon de liaison (24) présente, dans sa zone s'étendant de la bague de serrage (14), avec les segments de serrage (15), jusqu'à la partie de maintien (20), au moins une arête d'étanchéité (34) annulaire se projetant initialement radialement vers l'intérieur, entourant élastiquement l'extrémité de pointe du tube introduit.

2. Liaison à manchon à emboîtement selon la revendication 1, caractérisée en ce qu'à l'arête d'étanchéité (34) est associée, sur la face extérieure du tronçon de liaison (24), un bourrelet annulaire (36) se projetant initialement vers l'extérieur, augmentant la possibilité de déformation élastique de l'arête d'étanchéité (34), bourrelet annulaire (36) pour lequel un évidement périphérique (37) est ménagé dans la zone de l'extrémité de manchon, pour assurer son logement et sa fixation en position à l'état accouplé de la liaison à manchon.

3. Liaison à manchon à emboîtement selon les revendications 1 et 2, caractérisée en ce que l'évidement périphérique (37) a une section transversale à peu près en demi-cercle.

4. Liaison à manchon à emboîtement selon les revendications 2 et 3, caractérisée en ce que le bourrelet annulaire (36) comprend deux ou plusieurs nervures (38), orientées radialement vers l'extérieur, s'étendant parallèlement les unes aux autres, dont celles qui sont radialement extérieures viennent en appui élastique sur l'évidement périphérique (37).

5. Liaison à manchon à emboîtement selon l'une des revendications 2 à 4, caractérisée en ce que la largeur de l'arête d'étanchéité (34) dans la zone de sa base est inférieure à la largeur du bourrelet annulaire (36) associé extérieurement à l'arête d'étanchéité, dans la zone de sa base, et ainsi à la largeur de l'évidement périphérique (37).

6. Liaison à manchon à emboîtement selon la revendication 1 et 2, caractérisée en ce que le bourrelet annulaire (36) est pourvu d'un interstice d'introduction (38) radial, pour insérer une bague en acier (39) augmentant la rigidité en flexion, et en ce que l'arête d'étanchéité (34) est formée sur la face de limitation d'interstice, tournée vers l'extrémité frontale de manchon, du bourrelet annulaire (36).

7. Liaison à manchon à emboîtement selon la revendication 6, caractérisée en ce que, tant l'évidement périphérique (37), qu'également le bourrelet annulaire (36) ont une section transversale à peu près rectangulaire, et en ce que l'arête d'étanchéité (34) faisant saillie radialement du bourrelet annulaire (36) est en forme de lèvre.

8. Liaison à manchon à emboîtement selon l'une des revendications 1 à 5, caractérisée en ce que l'extrémité de manchon (2) comprend un bord de manchon (40) à conicité radialement intérieure, qui fait saillie frontalement sur la face frontale de manchon (22) située dans un plan passant transversalement par rapport à l'axe de tube et saisit par le dessus la partie de maintien (22).
